# FASCICULE DE BREVET EUROPEEN

(11) **EP 1 173 391 B1**
(45) Date de publication et mention de la délivrance du brevet: **01.02.2006**
(21) Numéro de dépôt: 00922704.2
(22) Date de dépôt: 20.04.2000
(51) Int. Cl.: C03C 17/00, C03C 17/02, C03C 17/30, C03C 17/32, C09K 3/18, C03C 15/00

(54) **SUBSTRAT TEXTURE SUSCEPTIBLE DE CONSTITUER UN VITRAGE, PROCEDE POUR SON OBTENTION**
TEXTURIERTES SUBSTRAT ZUR ERZEUGUNG EINER VERGLASUNG, VERFAHREN ZU DESSEN HERSTELLUNG
TEXTURED SUBSTRATE CAPABLE OF FORMING A GLAZING, METHOD FOR OBTAINING SAME

(30) Priorité: 22.04.1999 FR 9905082
(43) Date de publication de la demande: 23.01.2002
(73) Titulaire: SAINT-GOBAIN GLASS FRANCE, 92400 Courbevoie (FR)
(72) Inventeur: MARZOLIN, Christian, F-75003 Paris (FR); QUERE, David, F-75014 Paris (FR)
(74) Mandataire: Muller, René
(86) Numéro de dépôt international: PCT/FR2000/001051
(87) Numéro de publication internationale: WO 2000/064829

(56) Documents cités:
- EP-A- 0 629 592
- EP-A- 0 853 296
- EP-A- 0 952 122
- FR-A- 2 756 276
- US-A- 5 418 039
- US-A- 5 575 878

## Description

La présente invention a trait à un substrat texturé, c'est-à-dire présentant un relief particulier lui permettant d'obtenir des propriétés intéressantes, notamment dans le cas d'un substrat transparent et/ou d'un substrat pour lequel une certaine qualité optique est recherchée. Ces propriétés résident entre autres dans la modification du comportement du substrat en mouillabilité en un comportement pouvant être qualifié de super-hydrophobe ou super-hydrophile, dans des propriétés anti-salissure ou anti-reflet.

La propriété d'hydrophobie d'un substrat consiste en ce que les angles de contact entre l'eau et ce substrat sont élevés, par exemple de l'ordre de 120° pour l'eau. Le liquide a alors tendance à s'écouler aisément, sous forme de gouttes, sur le substrat, par simple gravité si le substrat est incliné ou sous l'effet de forces aérodynamiques dans le cas d'un véhicule en mouvement. Ce phénomène est l'expression d'un effet anti-pluie. Les gouttes sont, d'autre part, susceptibles d'entraîner dans leur écoulement des poussières, insectes ou salissures plus ou moins grasses de toutes natures dont la présence aurait pour conséquence un aspect inesthétique voire, le cas échéant, une altération de la vision à travers le substrat lorsque celui-ci est transparent. Dans cette mesure, le substrat hydrophobe présente également une propriété anti-salissure.

Des agents hydrophobes connus sont, par exemple, des alkylsilanes fluorés tels que décrits dans la demande de brevet EP-A1-0 675 087. Ils sont appliqués de manière connue en solution selon des modes de dépôt classiques avec ou sans chauffage.

Au contraire, la propriété d'hydrophilie d'un substrat se manifeste par de faibles angles de contact entre l'eau et ce substrat, de l'ordre de 5° pour l'eau sur du verre propre. Cette propriété favorise la formation de films liquides fins transparents, au détriment de celle de buée, ou de givre constitués de minuscules gouttelettes nuisant à la visibilité à travers un substrat transparent. Ces effets anti-buée et anti-givre observés sur un substrat hydrophile sont bien connus.

De nombreux agents hydrophiles, notamment hydroxylés, tels que des poly((méth)acrylates d'hydroxyalkyle) sont utilisés à cette fin, de manière connue, pour des substrats transparents. Certains composés, dits photocatalytiques, tels que TiO₂, sont d'autre part utilisés, notamment en association avec des substrats verriers, non seulement pour leur caractère hydrophile après exposition à la lumière, mais aussi pour leur aptitude à dégrader, par un processus d'oxydation radicalaire, les salissures d'origine organique ; les propriétés hydrophile et anti-salissure sont alors obtenues simultanément. Il est connu de déposer des revêtements à propriété photocatalytique comprenant TiO₂ à partir d'au moins un précurseur de titane, le cas échéant en solution, par pyrolyse en phase liquide, par une technique sol-gel ou encore par pyrolyse en phase vapeur.

Conformément à ce qui précède, la propriété d'hydrophobie s'apprécie quantitativement par la mesure de l'angle de contact formé, le plus souvent, par une goutte d'eau, sur un substrat donné. A défaut d'indication supplémentaire, cet angle de contact est mesuré pour un substrat horizontal. En réalité, comme déjà mentionné ci-dessus, c'est le comportement de gouttes de liquide en dynamique qui est visé par le fait de conférer une hydrophobie à un substrat. Ceci vaut aussi bien pour des substrats statiques sensiblement verticaux tels que les vitrages extérieurs pour le bâtiment, les vitrages de douches que pour les vitrages de véhicules de transport. Or, dans le cas d'une goutte de liquide sur un substrat incliné par rapport à l'horizontale, on observe deux angles de contact différents : l'angle d'avancée et l'angle de reculée, déterminés à l'avant, respectivement à l'arrière de la goutte, par rapport au sens de son déplacement. Ces angles sont des valeurs atteintes à la limite du décrochement de la goutte. On appelle hystérèse la différence entre l'angle d'avancée et l'angle de reculée. Une goutte d'eau présentant une hystérése élevée ou un angle de reculée faible aura du mal à s'écouler sur un substrat. Ainsi, on comprend aisément qu'une hydrophobie efficace est conditionnée à la fois par un angle d'avancée élevé et une hystérèse faible.

Les inventeurs ont précisément obtenu, sur ce plan, des résultats excellents encore jamais atteints à l'heure actuelle. Sur un substrat conforme à l'invention et hydrophobe, il a été obtenu un écoulement exceptionnellement aisé et rapide de gouttes d'eau. Qui plus est, il a pu être vérifié que les mesures prévues conformément à l'invention sont également de nature à exacerber le caractère hydrophile d'un substrat. L'une des conséquences en est dans certains cas, conformément aux explications qui précèdent, que le caractère anti-salissure atteint un niveau très élevé.

Ces résultats sont réalisés, conformément à l'invention, par un substrat comportant un relief qui délimite un niveau bas et un niveau haut de surface, distants d'une certaine hauteur non inférieure à 1/10^{ème} des dimensions caractéristiques des motifs formant ledit niveau haut, ce dernier représentant 1 à 65 % de la surface du substrat.

Un tel substrat s'est en effet révélé apte à procurer des propriétés super-hydrophobe ou super-hydrophile et notamment, vis-à-vis de gouttes d'eau s'écoulant sup lui, un angle d'avancée très élevé pour une hystérèse très faible.

Dans la variante de l'invention dans laquelle le substrat est hydrophobe, il comprend de préférence un agent choisi dans le groupe constitué par :
a) les silicones, et
b) les composés répondant aux formules : 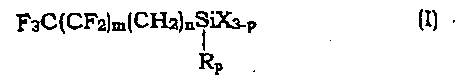 et

   R_{p'}SiX_{4-p'} (II)

   dans lesquelles
   - m=0 à 15;
   - n= 1 à 5 ;
   - p=0, 1 ou 2 ;
   - R est un groupe alkyle linéaire ou ramifié ou un atome d'hydrogène ;
   - X est un groupe hydrolysable tel qu'un groupe halogène, alkoxy, acétoxy, acyloxy, amino, NCO ;
   - p'=0,1,2 ou3.

Selon la seconde variante principale de l'invention, Le substrat est hydrophile par le fait qu'il comprend un agent approprié. Comme agent hydrophile on peut citer, en tant que produit final ou précurseur, les polyacide (méth)acrylique tel quel ou au moins partiellement salifié au sodium, potassium, césium..., tensioactifs non ioniques, esters de cellulose tels qu'hydroxypropylcellulose, dèrivés de chitosan et de chitine, polyméthacrylates, poly(alcools vinyliques) et poly(acétate de vinyle), polypyrrole, polyaniline, poly(acrylamide), poly(N,N-diméthylacrylamide), poly(N-isopropylacrylamide), polméthylène glycol), poly(propylène glycol), poly(okyéthylène) à fonctions hydroxy ou méthoxy terminales, chlorhydrate de poly(allylamine), polysaccharide, dextrans(ramifiés), pullulan(polysaccharide linéaire), poly(acide styrénecarboxylique) et sel de celui-ci, poly(acide atyrenesulfonique), poly(styrèriesulfonate) de sodium, poly(vinyl butyral), poly(iodure de 2-vinyl-N methyl pyridinium), poly(iodure de 4-vinyl-N-méthyl pyridinium),poly(2-vinyl pyridine), poly(bromure de 2-vinyl pyridinium), poly(vinyl pyrrolidone), copolymères obtenus à partir de monomères de départ de différents polymères précités, et notamment copolymères séquencés, certains composés du titane tels que tétraisopropyle de titane ou tétraisobutyle de titane, éventuellement stabilisé, par exemple par acétylacétonate, tétrachlorure de titane...

De préférence, la hauteur dudit niveau haut de surface par rapport audit niveau bas de surface est comprise entre 0,01 et 10 micromètres.

La géométrie du relief dont est muni le substrat peut ou non présenter une périodicité.

Dans plusieurs exemples de réalisation de l'invention ayant procuré des performances élevées, lesdits niveau bas et niveau haut de surface sont reliés l'un à l'autre par des parois sensiblement perpendiculaires au plan du substrat.

Conformément à l'invention, le relief du substrat peut emprunter diverses formes.

Selon un premier type de formes, ledit niveau haut de surface présente une continuité dans au moins une direction du plan du substrat ; il est sous-entendu dans ce type de formes que la continuité du niveau haut existe sinon sur la totalité de l'étendue du substrat, du moins sur une proportion substantielle de celle-ci, relativement à ladite direction concernée.

Ces formes sont notamment représentées par un relief comprenant une multiplicité d'objets sensiblement identiques et parallélépipédiques parallèles et régulièrement espacés. Dans ce cas il y a continuité du niveau haut de surface selon une direction unique.

Un cas où cette continuité existe dans deux directions du plan du substrat pourrait être représenté par un relief comprenant une multiplicité de cratères sensiblement identiques et cylindriques régulièrement répartis sur le substrat, leurs axes étant sensiblement perpendiculaires au plan du substrat (à condition que ces cratères soient disposés sur une proportion substantielle de l'étendue du substrat, comme défini précédemment).

Selon un deuxième type de formes du relief, ledit niveau haut de surface ne présente de continuité dans aucune des directions du plan du substrat.

Ce type est notamment représenté par un relief essentiellement constitué par un ensemble discret d'objets identiques ou différents, en particulier des cylindres d'axes sensiblement perpendiculaires au plan du substrat, notamment des cylindres de révolution identiques et régulièrement répartis sur le substrat.

Conformément à différents modes de réalisation de l'invention ont été formés des reliefs à base d'au moins un composé de l'un au moins des éléments : Si, W, Sb, Ti, Zr, Ta, V, Pb, Mg, Al, Mn, Co, Ni, Sn, Zn, In et/ou d'une matière plastique éventuellement chargée, durcissable par application d'une source d'énergie ou thermoplastique, au moins une partie sous-jacente du substrat étant constituée d'un verre et/ou d'une matière plastique (notamment du type entrant dans la constitution habituelle d'un vitrage, ce qui sera expliqué plus en détails ci-dessous).

Conformément à une variante particulièrement intéressante de l'invention, le substrat est conducteur d'électricité. Il est alors par exemple constitué d'oxydes métalliques sous-stoechiométriques et/ou dopés tels que décrits dans la demande FR 2 695 117.

Des exemples mentionnés dans cette demande en sont l'oxyde d'indium dopé à l'étain (ITO), l'oxyde de zinc dopé à l'indium (ZnO:In), au fluor (ZnO:F), à l'aluminium (ZnO:Al) ou à l'étain (ZnO:Sn) et l'oxyde d'étain dopé au fluor (SnO₂:F). En plus de leurs propriétés de conduction de l'électricité, ces matériaux sont décrits comme présentant des propriétés de réflexion dans l'infrarouge, notamment de basse-émissivité (cas d'un substrat transparent). Néanmoins, l'aptitude du substrat à conduire l'électricité vise principalement, dans le cadre de la présente demande, la fonction antistatique, c'est-à-dire la capacité de dissiper les charges électrostatiques et à en éviter l'accumulation localement et, dans une moindre mesure, la constitution de films chauffants, notamment pour le dégivrage et le désembuage de vitrages. D'autres matériaux conducteurs d'électricité utilisables sont l'oxyde d'étain dopé antimoine (pentavalent ou tètravalent) SnO₂:Sb, un matériau comprenant par exemple SiH₄ ou CH₄ comme précurseur afin de former des liaisons métalliques du type Si-Si ou C-C ou des sels métalliques tels qu'acétylacétonate de cuivre. L'intérêt d'éviter des accumulations locales de charges électrostatiques apparaît dans des applications telles que pare-brise d'avion, dans lequel il importe au contraire d'évacuer ces charges par conduction. Des accumulations de charges constitueraient en effet une source de craquèlement et destruction d'éventuelles couches fonctionnelles empilées, ainsi que de la structure même du substrat, notamment lorsqu'il est feuilleté ou stratifié.

De manière avantageuse, le substrat de l'invention présente des propriétés anti-reflet. Ceci peut être obtenu par le fait que les dimensions caractéristiques du relief sur le substrat n'excèdent pas les longueurs d'ondes du domaine visible, de préférence 200 nm, voire 100 nm. Alternativement ou de façon complémentaire, les propriétés anti-reflet peuvent résulter d'un traitement sous la forme d'un empilement de couches minces interférentielles, consistant en général en une alternance de couches à base de matériau diélectrique à forts et faibles indices de réfraction. Déposé sur un substrat transparent, un tel revêtement a pour fonction d'en diminuer la réflexion lumineuse, donc d'en augmenter la transmission lumineuse.

En face extérieure d'un pare-brise automobile, pour lequel des niveaux élevés de transmission lumineuse, en général supérieurs à 75 %, et un flou résiduel très faible (inférieur à 1 % de la lumière transmise) sont imposés, l'effet anti-reflet a pour conséquence l'amélioration du confort visuel du conducteur et des passagers.

De préférence, le substrat de l'invention présente des propriétés anti-salissure. Celles-ci peuvent résulter partiellement, comme il a été vu ci-dessus, des propriétés (super-)hydrophobe ou (super-) hydrophile. Ces propriétés peuvent également être liées directement à la nature de certains constituants du substrat. Ainsi, parmi les agents hydrophiles mentionnés précédemment, certains composés du titane, par exemple TiO₂, ont l'aptitude de décomposer par voie photocatalytique les résidus organiques.

D'autres objets de l'invention résident dans un ensemble de procédés de formation du substrat décrit ci-dessus.

Un premier procédé comprend les étapes consistant à :
- appliquer sur une surface support un précurseur de consistance liquide à visqueuse, à
- réaliser à partir de ce précurseur le moulage d'un sol-gel, puis à
- consolider celui-ci par évaporation de solvant éventuellement assistée par une source d'énergie.

Un second procédé comprend les étapes consistant à :
- appliquer sur une surface support une composition polymérisable et/ou réticulable de matière plastique contenant éventuellement des charges, notamment des charges minérales de renforcement, à
- effectuer la polymérisation et/ou la réticulation ainsi que la séparation d'éventuels constituants résiduels tels que solvant, éventuellement assistées par une source d'énergie.

Conviennent comme matières plastiques de nombreux thermoplastiques du type polyoléfines, polyamides, polyvinylbutyral, polyuréthannes, poly(méth)acrylates, copolymères séquencés... ainsi que des résines thermodurcissables ou photorèticulables classiques à base de polyester insaturé, phénolique, polyuréthanne...

Le troisième procédé principal de l'invention comprend les étapes consistant à :
- former sur une surface un masque selon une technique telle que sérigraphie, impression jet d'encre, lithographie, en particulier photolithographie, gravure par exemple ionique réactive, ou similaire,
- attaquer notamment par voie chimique les parties de ladite surface non protégées par ce masque puis éventuellement à
- éliminer le masque.

Selon un quatrième procédé, on fait adhérer à une surface support un film formant lui-même ledit relief. Ce film peut être à base de matière plastique, notamment thermoplastique.

Chacun de ces quatre procédés aboutit :
- soit à la formation d'un moule utilisable pour former le substrat de l'invention,
- soit à la formation du substrat lui-même.

Eu égard à la recherche de super-hydrophobie ou de super-hydrophilie qui a suscité l'invention, il doit être précisé que les agents hydrophobes ou hydrophiles sont appliqués en principe séparément selon deux modes principaux bien connus : ils peuvent être incorporés dans le substrat, c'est à dire intégrés dans le matériau du substrat, ou bien déposés sous forme d'un revêtement sur le relief du substrat. Selon ce second mode, il est connu de constituer des revêtements hydrophobes en couches ou films d'épaisseurs variables, notamment des films dits monomoléculaires dont l'épaisseur correspond à la longueur des molécules qui le constituent et atteint des valeurs aussi faibles que de quelques nanomètres à quelques dizaines de nanomètres.

Les propriétés d'hydrophobie et d'hydrophilie se contrariant l'une l'autre, le substrat de l'invention ne comprend en général qu'un ou plusieurs agents hydrophobes ou un ou plusieurs agents hydrophiles. Cependant les inventeurs ont pu faire coexister les deux types d'agents dans un mode de réalisation particulièrement intéressant dans lequel est formé sur une surface support de TiO₂ anti-salissure un relief d'objets en matériau hydrophobe, par exemple à base de perfluoroalkylalkyltrialkoxysilane. Le niveau haut de surface est alors doté d'un caractère hydrophobe contribuant subsidiairement à l'évacuation de la salissure. En fonction de la géométrie du relief, il n'est pas exclu qu'un liquide s'écoulant sur le substrat entre partiellement en contact avec le niveau bas de surface du relief, caractérisé par sa double propriété hydrophile et photocatalytique. Il est donc possible par un choix approprié de géométrie du relief de tirer avantage de la synergie des divers constituants du substrat de manière à favoriser l'évacuation des liquides sur sa surface et garantir un niveau élevé de propreté en l'absence de nettoyage.

Les substrats transparents sont visés particulièrement par l'invention, dont un autre objet consiste donc en un vitrage constitué au moins en partie du substrat décrit ci-dessus. A l'exclusion des spécificités du relief conforme à l'invention, il doit être entendu que la structure d'un tel vitrage est habituelle, c'est-à-dire notamment monolithique ou feuilletée. Cette structure fait intervenir des feuilles de verre, des couches de matière plastique : polyvinylbutyral, polyuréthanne, polycarbonate, poly(méth)acrylate, copolymère éthylène/acétate de vinyle... ainsi que des films sérigraphiés fonctionnels ou de décor, des réseaux de fils chauffants ou d'antenne...

Les applications du vitrage de l'invention sont variées : vitrage pour le bâtiment (fenêtres), le mobilier urbain (panneau d'affichage, Abribus...), pour véhicule de transport aérien, maritime ou terrestre (ferroviaire, routier), pour un écran, une lampe ou un panneau lumineux, pour l'aménagement intérieur, le mobilier ou l'électroménager : panneau décoratif, mobilier sanitaire (paroi de douche), tablette, porte de réfrigérateur, de four, vitrine, plaque vitrocéramique...

D'autres caractéristiques et avantages de l'invention apparaîtront dans la description de l'exemple qui suit.

### EXEMPLE

Une plaquette de silicium parfaitement plane de 3 cm x 3 cm pour une épaisseur de 0,2 cm est rendue hydrophobe par greffage d'une monocouche de fluorosilane F₃C(CF₂)₉(CH₂)₂SiCl₃. Les angles de contact de l'eau (angle d'avancée Aₐ et angle de reculée Aᵣ) sont mesurés au moyen d'un goniomètre avec une précision de l'ordre du degré et consignés dans le tableau ci-dessous. Pour ce faire, on forme à la surface de la plaquette une goutte d'eau au moyen d'une pipette et l'on mesure l'angle d'avancée pendant la croissance de la goutte ; dans une deuxième phase, on diminue le volume de la goutte en aspirant progressivement l'eau qui la constitue dans la pipette, l'angle de contact mesuré au cours de cette opération étant l'angle de reculée.

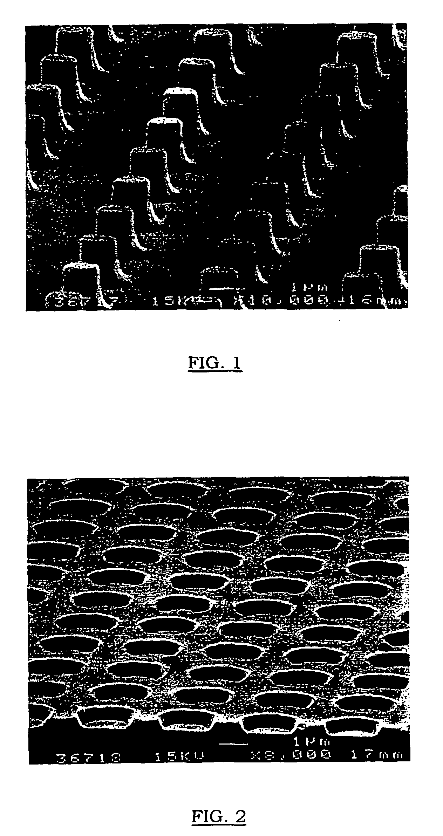

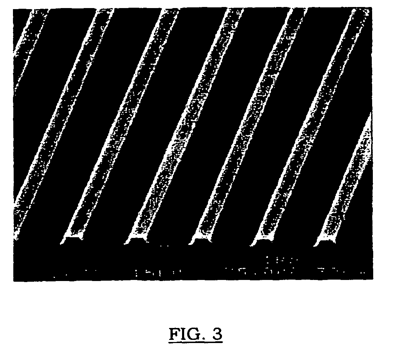

Ensuite sont formés sur des plaquettes identiques à celle précitée les reliefs représentés sur les figures 1, 2 et 3 annexées, par moulage d'un sol-gel de tétraméthoxysilane. Après la gélification, la structure de silice est consolidée à 1100°C pendant 2 heures et rendue hydrophobe comme indiqué précédemment. Le moulage du sol-gel est effectué conformément à l'enseignement de la publication MARZOLIN C. et al. *Advanced Materials* 10 (1998) 571, incorporé dans la présente demande à titre de référence. Les reliefs sont respectivement désignés par les termes « picots », « cratères » et « cannelures». Ces trois reliefs définissent conformément à l'invention un niveau bas et un niveau haut de surface distants d'une hauteur non inférieure à 1/10^{ème} des dimensions caractéristiques des motifs formant ledit niveau haut, c'est à dire respectivement le diamètre des picots cylindriques, la distance entre deux cratères et la largeur des cannelures. D'autre part, pour ces trois formes de relief reprises dans le même ordre, ledit niveau haut de surface représente 5 %, 64 % et 25 % de la surface du substrat. Les dimensions caractéristiques des trois reliefs sont de l'ordre du micromètre.

Les angles d'avancée et de reculée sont mesurés sur chacune des plaquettes et consignés dans le tableau ci-dessous.

**TABLEAU**

| Plaquette | Aₐ (degrés) | Aᵣ (degrés) |
|---|---|---|
| Plane | 118 | 100 |
| Picots | 170 | 155 |
| Ratères | 138 | 75 |
| Cannelures (perpendiculaire) | 165 | 132 |
| Cannelures (parallèle) | 143 | 125 |

| | | |
|---|---|---|
| Les mentions « perpendiculaire » et « parallèle » font référence aux directions dans lesquelles sont effectuées les mesures d'angle d'avancée et de reculée par rapport à la direction des cannelures. | | |

On constate par rapport au témoin constitué par la plaquette plane que les plaquettes à reliefs conformes à l'invention procurent dans tous les cas une augmentation substantielle de l'angle d'avancée tout en préservant une hystérèse peu ou pas modifiée. A titre d'exception, on observe une diminution défavorable de l'angle de reculée dans le cas de la plaquette à cratères ; ce phénomène est probablement lié à la géométrie particulière de cette surface, et pourrait être interprété comme l'expression d'un effet « ventouse » exercé par les cratères, qui retiendrait l'eau dans son écoulement. Il n'en demeure pas moins que les autres valeurs obtenues traduisent un degré exceptionnellement élevé du caractère hydrophobe, bien supérieur à celui de la plaquette plane.

## Revendications

1. Substrat comportant un relief qui délimite un niveau bas et un niveau haut de surface, distants d'une certaine hauteur non inférieure à 1/1.0^{éme} des dimensions caractéristiques des motifs formant ledit niveau haut, ce dernier représentant 1 à 65 % de la surface du substrat, celui-ci comprenant des agents hydrophobes et/ou hydrophiles.

2. Substrat selon la revendication 1, **caractérisé en ce qu'**il est hydrophobe par le fait qu'il comprend un agent choisi dans le groupe constitué par :
a) les silicones, et
b) les composés répondant aux formules: 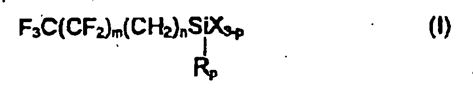 et
Rₚ,SiX_{4-p'} (II)
dans lesquelles:
- m=0 à 15;
- n=1 à 5;
- p=0.1 ou 2;
- R est un groupe alkyle linéaire ou ramifié ou un atome d'hydrogène :
- X est un groupe hydrolysable tel qu'un groupe halogéno, alkoxy, acétoxy, acyloxy, amino, NCO ;
- p'=0.1,2 ou 3.

3. Substrat selon l'une des revendications 1 à 2, **caractérisé en ce que** ladite hauteur est comprise entre 0,01 et 10 micromètres.

4. Substrat selon l'une des revendications 1 à 3, **caractérisé en ce que** la géométrie dudit relief ne présente aucune périodicité.

5. Substrat selon l'une des revendications 1 à 3, **caractérisé en ce que** la géométrie dudit relief présente une périodicité.

6. Substrat selon l'une des revendications 1 à 5, **caractérisé en ce que** lesdits niveau bas et niveau haut de surface sont reliés l'un à l'autre par des parois sensiblement perpendiculaires au plan du substrat.

7. Substrat selon l'une des revendications 1 à 6, **caractérisé en ce que** ledit niveau haut de surface présente une continuité dans au moins une direction du plan du substrat.

8. Substrat selon la revendication 7, **caractérisé en ce que** ledit relief comprend une multiplicité d'objets sensiblement identiques et parallélépipédiques parallèles et régulièrement espacés.

9. Substrat selon l'une des revendications 1 à 6, **caractérisé en ce que** ledit niveau haut de surface ne présente de continuité dans aucune des directions du plan du substrat.

10. Substrat selon l'une des revendications précédentes, **caractérisé en ce que** ledit relief comprend une multiplicité de cratères sensiblement identiques et cylindriques régulièrement répartis sur le substrat, leurs axes étant sensiblement perpendiculaires au plan du substrat.

11. Substrat selon l'une des revendications précédentes, **caractérisé en ce que** ledit relief comprend un ensemble discret d'objets identiques ou différents.

12. Substrat selon la revendication 11, **caractérisé en ce que** lesdits objets comprennent des cylindres d'axes sensiblement perpendiculaires au plan du substrat.

13. Substrat selon la revendication 12, **caractérisé en ce que** ledit relief comprend une multiplicité de cylindres de révolution sensiblement identiques et régulièrement répartis sur le substrat.

14. Substrat selon l'une des revendications précédentes, **caractérisé en ce que** ledit relief est à base d'au moins un composé de l'un au moins des éléments : Si, W, Sb, Ti, Zr, Ta, V, Pb, Mg, Al, Mn, Co, Ni, Sn, Zn, In, et/ou d'une matière plastique éventuellement chargée, durcissable par application d'une source d'énergie ou thermoplastique, et **en ce qu'**au moins une partie sous-jacente du substrat est constituée d'un verre et/ou d'une matière plastique.

15. Substrat selon l'une des revendications précédentes, **caractérisé en ce qu'**il est conducteur d'électricité.

16. Substrat selon l'une des revendications précédentes, **caractérisé en ce qu'**il présente des propriétés anti-reflet.

17. Substrat selon l'une des revendications précédentes, **caractérisé en ce qu'**il présente des propriétés anti-salissure.

18. Procédé de formation d'un substrat comportant un relief selon l'une des revendications précédentes, **caractérisé en ce qu'**il comprend les étapes consistant à :
- appliquer sur une surface support un précurseur de consistance liquide à visqueuse, à
- réaliser à partir de ce précurseur le moulage d'un sol-gel, puis à
- consolider celui-ci par évaporation de solvant éventuellement assistée par une source d'énergie, et **en ce qu'un** agent hydrophobe ou hydrophile est incorporé dans ledit substrat comportant un relief ou **en ce qu'**il comprend une étape consistant à former un revêtement hydrophobe ou hydrophile sur ledit relief.

19. Procédé de formation d'un substrat comportant un relief selon l'une des revendications 1 à **caractérisé en ce qu'il** comprend les étapes consistant à:
- appliquer sur une surface support une composition polymérisable et/ ou réticulable de matière plastique contenant éventuellement des charges, notamment des charges minérales de renforcement, à
- effectuer la polymérisation et/ou la réticulation ainsi que la séparation d'éventuels constituants résiduels tels que solvant, éventuellement assistées par une source d'énergie, et **en ce qu'un** agent hydrophobe ou hydrophile est incorporé dans ledit substrat comportant un relief ou **en ce qu'**il comprend une étape consistant à former un revêtement hydrophobe ou hydrophile sur ledit relief.

20. Procédé de formation d'un substrat comportant un relief selon l'une des revendications 1 à 17, **caractérisé en ce qu'**il comprend les étapes consistant à :
- former sur une surface un masque selon une technique telle que sérigraphie, impression jet d'encre, lithographie, en particulier photolithographie, gravure par exemple ionique réactive, ou similaire,
- attaquer notamment par voie chimique les parties de ladite surface non protégées par ce masque puis éventuellement à
- éliminer le masque, et **en ce qu'un** agent hydrophobe ou hydrophile est incorporé dans ledit substrat comportant un relief ou **en ce qu'**il comprend une étape consistant à former un revêtement hydrophobe ou hydrophile sur ledit relief.

21. Procédé de formation d'un substrat comportant un relief selon l'une des revendications 1 à 17, **caractérisé en ce qu'**il comprend une étape consistant à faire adhérer à une surface support un film formant lui-même ledit relief et **en ce qu'un** agent hydrophobe ou hydrophile est incorporé dans ledit substrat comportant un relief ou **en ce qu'**il comprend une étape consistant à former un revêtement hydrophobe ou hydrophile sur ledit relief. et [α] (rev 25) ou [β] (rev 26).

22. Procédé selon l'une des revendications 18 à 21, **caractérisé en ce que** les étapes revendiquées conduisent à la formation d'un moule utilisable pour former ledit substrat.

23. Procédé selon l'une des revendications 18 à 21, **caractérisé en ce que** les étapes revendiquées conduisent à la formation dudit substrat lui-mème.

24. Vitrage constitué au moins en partie d'un substrat selon l'une des revendications 1 à 17.

25. Application d'un vitrage selon la revendication 24 pour le bâtiment ou le mobilier urbain.

26. Application d'un vitrage selon la revendication 24 pour un véhicule de transport aérien, maritime ou terrestre.

27. Application d'un vitrage selon la revendication 24 pour un écran, une lampe ou un panneau lumineux.

28. Application d'un vitrage selon la revendication 24 pour le mobilier ou l'électroménager, par exemple en tant que tablette pour réfrigérateur ou autre, paroi de douche, porte de réfrigérateur, de four, vitrine, plaque vitrocéramique.

## Patentansprüche

1. Substrat, das ein Relief umfasst, das eine untere und eine obere Oberflächenhöhe begrenzt, die mit einer bestimmten Höhe von nicht kleiner als 1/10 der charakteristischen Abmessungen der diese obere Höhe bildenden Muster beabstandet sind, die 1 bis 65 % der Oberfläche des Substrats ausmacht, das hydrophobe und/oder hydrophile Mittel umfasst.

2. Substrat nach Anspruch 1, **dadurch gekennzeichnet, dass** es **dadurch** hydrophob ist, dass es ein Mittel umfasst, das aus der Gruppe ausgewählt ist, die aus
a) Siliconen und
b) Verbindungen mit der Formel 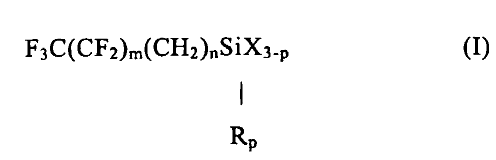 und
Rₚ,SiX₄₋ₚ, (II)
besteht, in welchen
- m = 0 bis 15,
- n = 1 bis 5;
- p = 0, 1 oder 2,
- R eine geradkettige oder verzweigte Alkylgruppe oder ein Wasserstoffatom,
- X eine hydrolysierbare Gruppe wie eine Halogen-, Alkoxy-, Acetoxy-, Acyloxy-, Amino- und NCO-Gruppe und
- p' = 0, 1, 2 oder 3
bedeutet.

3. Substrat nach Anspruch 1 oder 2, **dadurch gekennzeichnet, dass** die Höhe 0,01 bis 10 Mikrometer beträgt.

4. Substrat nach einem der Ansprüche 1 bis 3, **dadurch gekennzeichnet, dass** die Geometrie des Reliefs keine Periodizität aufweist.

5. Substrat nach einem der Ansprüche 1 bis 3, **dadurch gekennzeichnet, dass** die Geometrie des Reliefs eine Periodizität aufweist.

6. Substrat nach einem der Ansprüche 1 bis 5, **dadurch gekennzeichnet, dass** die untere und die obere Oberflächenhöhe durch im Wesentlichen zur Substratebene senkrechte Wände miteinander verbunden sind.

7. Substrat nach einem der Ansprüche 1 bis 6, **dadurch gekennzeichnet, dass** die obere Oberflächenhöhe in mindestens einer Richtung der Substratebene Kontinuität aufweist.

8. Substrat nach Anspruch 7, **dadurch gekennzeichnet, dass** das Relief eine Vielzahl von im Wesentlichen identischen parallelepipedischen Objekten, die parallel zueinander und regelmäßig voneinander beabstandet sind, umfasst.

9. Substrat nach einem der Ansprüche 1 bis 6, **dadurch gekennzeichnet, dass** die obere Oberflächenhöhe in keiner Richtung der Substratebene Kontinuität aufweist.

10. Substrat nach einem der vorhergehenden Ansprüche, **dadurch gekennzeichnet, dass** das Relief eine Vielzahl von Kratern umfasst, die im Wesentlichen identisch und zylindrisch und regelmäßig über das Substrat verteilt sind, wobei ihre Achsen zur Substratebene im Wesentlichen senkrecht stehen.

11. Substrat nach einem der vorhergehenden Ansprüche, **dadurch gekennzeichnet, dass** das Relief eine diskrete Einheit aus identischen oder unterschiedlichen Objekten umfasst.

12. Substrat nach Anspruch 11, **dadurch gekennzeichnet, dass** die Objekte Zylinder mit zur Substratebene im Wesentlichen senkrechten Achsen umfassen.

13. Substrat nach Anspruch 12, **dadurch gekennzeichnet, dass** das Relief eine Vielzahl von rotationssymmetrischen Zylindern umfasst, die im Wesentlichen identisch und auf dem Substrat regelmäßig verteilt sind.

14. Substrat nach einem der vorhergehenden Ansprüche, **dadurch gekennzeichnet, dass** das Relief auf der Basis von mindestens einer Verbindung von mindestens einem der Elemente Si, W, Sb, Ti, Zr, Ta, V, Pb, Mg, Al, Mn, Co, Ni, Sn, Zn und In und/oder einem gegebenenfalls gefüllten Kunststoff, der durch Anwendung einer Energiequelle aushärtbar oder thermoplastisch ist, ist, und dass mindestens ein darunter befindlicher Teil des Substrats aus einem Glas und/oder Kunststoff besteht.

15. Substrat nach einem der vorhergehenden Ansprüche, **dadurch gekennzeichnet, dass** es elektrisch leitfähig ist.

16. Substrat nach einem der vorhergehenden Ansprüche, **dadurch gekennzeichnet, dass** es Antireflexeigenschaften besitzt.

17. Substrat nach einem der vorhergehenden Ansprüche, **dadurch gekennzeichnet, dass** es schmutzabweisende Eigenschaften besitzt.

18. Verfahren zur Herstellung eines Substrats, das ein Relief nach einem der vorhergehenden Ansprüche umfasst, **dadurch gekennzeichnet, dass** es die Stufen umfasst, die aus der
- Aufbringung eines Precursors mit flüssiger bis viskoser Konsistenz auf eine Trägeroberfläche,
- Formgebung eines Sol-Gels aus diesem Precursor und anschließend
- dessen Verfestigung durch Verdampfung des Lösungsmittels, die gegebenenfalls von einer Energiequelle unterstützt wird,
bestehen, **und dass** ein hydrophobes oder hydrophiles Mittel in das ein Relief umfassende Substrat eingebaut wird, **oder dass** es eine Stufe umfasst, die darin besteht, eine hydrophobe oder hydrophile Beschichtung auf dem Relief zu bilden.

19. Verfahren zur Herstellung eines ein Relief umfassenden Substrats nach einem der Ansprüche 1 bis 17, **dadurch gekennzeichnet, dass** es die Stufen umfasst, die aus dem
- Aufbringen einer polymerisierbaren und/oder vernetzbaren Kunststoffzusammensetzung, die gegebenenfalls Füllungen, insbesondere verstärkende anorganische Füllungen, enthält, auf eine Trägeroberfläche und
- Polymerisieren und/oder Vernetzen sowie Abtrennen möglicher übriger Bestandteile wie Lösungsmittel, die gegebenenfalls von einer Energiequelle unterstützt werden,
bestehen, und dass ein hydrophobes oder hydrophiles Mittel in das ein Relief umfassende Substrat eingebaut wird, **oder dass** es eine Stufe umfasst, die darin besteht, eine hydrophobe oder hydrophile Beschichtung auf dem Relief zu bilden.

20. Verfahren zur Herstellung eines ein Relief umfassenden Substrats nach einem der Ansprüche 1 bis 17, **dadurch gekennzeichnet, dass** es die Stufen umfasst, die aus dem
- Bilden einer Maske gemäß einem Verfahren wie Siebdruck, Tintenstrahldruck, Lithographie, insbesondere Photolithographie, Gravieren, beispielsweise ionenreaktives Gravieren, oder dergleichen auf einer Oberfläche,
- Ätzen, insbesondere chemisches, der von dieser Maske nicht geschützten Bereiche dieser Oberfläche und anschließend gegebenenfalls
- Entfernen der Maske
bestehen, und dass ein hydrophobes oder hydrophiles Mittel in das ein Relief umfassende Substrat eingebaut wird, oder dass es eine Stufe umfasst, die darin besteht, eine hydrophobe oder hydrophile Beschichtung auf dem Relief zu bilden.

21. Verfahren zur Herstellung eines ein Relief umfassenden Substrats nach einem der Ansprüche 1 bis 17, **dadurch gekennzeichnet, dass** es eine Stufe enthält, die darin besteht, auf einer Trägeroberfläche eine Folie anhaften zu lassen, die das Relief bildet, und dass ein hydrophobes oder hydrophiles Mittel in das ein Relief umfassende Substrat eingebaut wird, oder dass es eine Stufe umfasst, die darin besteht, eine hydrophobe oder hydrophile Beschichtung auf dem Relief zu bilden.

22. Verfahren nach einem der Ansprüche 18 bis 21, **dadurch gekennzeichnet, dass** die beanspruchten Stufen zur Herstellung einer Form führen, die zur Bildung des Substrats verwendbar ist.

23. Verfahren nach einem der Ansprüche 18 bis 21, **dadurch gekennzeichnet, dass** die beanspruchten Stufen zur Bildung des Substrats selbst führen.

24. Glasscheibe, die wenigstens teilweise aus einem Substrat nach einem der Ansprüche 1 bis 17 besteht.

25. Verwendung einer Glasscheibe nach Anspruch 24 im Bauwesen oder für die Stadtmöblierung.

26. Verwendung einer Glasscheibe nach Anspruch 24 für ein erdgebundenes, Luft- oder Seetransportfahrzeug.

27. Verwendung einer Glasscheibe nach Anspruch 24 für einen Bildschirm, eine Lampe oder ein Leuchtpanel.

28. Verwendung einer Glasscheibe nach Anspruch 24 für Möbel oder elektrische Haushaltgeräte, beispielsweise als Einlegeboden für einen Kühlschrank oder dergleichen, Wand einer Duschkabine, Kühlschranktür, Ofentür, Glasschrank und Glaskeramikplatte.

## Claims

1. Substrate comprising a relief which delimits a bottom surface level and a top surface level separated by a certain height not less than 1/10th of the dimensions characteristic of the features forming the said top level, the latter representing 1 to 65% of the surface area of the substrate, this substrate comprising hydrophobic and/or hydrophilic agents.

2. Substrate according to Claim 1, **characterized in that** it is hydrophobic **in that** it comprises an agent chosen from the group consisting of:
a) silicones, and
b) compounds corresponding to the formulae: 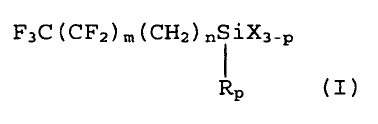 and
R_{p'} · SiX_{4-p'} (II)
in which:
- m = 0 to 15;
- n = 1 to 5;
- p = 0, 1 or 2;
- R is a linear or branched alkyl group or a hydrogen atom;
- X is a hydrolysable group, such as a halo, alkoxy, acetoxy, acyloxy, amino or NCO group;
- p' = 0, 1, 2 or 3.

3. Substrate according to either of Claims 1 and 2, **characterized in that** the said height is between 0.01 and 10 micrometers.

4. Substrate according to one of Claims 1 to 3, **characterized in that** the geometry of the said relief does not exhibit any periodicity.

5. Substrate according to one of Claims 1 to 3, **characterized in that** the geometry of the said relief exhibits a periodicity.

6. Substrate according to one of Claims 1 to 5, **characterized in that** the said bottom surface level and the said top surface level are connected to one another via walls substantially perpendicular to the plane of the substrate.

7. Substrate according to one of Claims 1 to 6, **characterized in that** the said top surface level exhibits a continuity in at least one direction of the plane of the substrate.

8. Substrate according to Claim 7, **characterized in that** the said relief comprises a multiplicity of parallel and uniformly spaced parallelepipedal and substantially identical objects.

9. Substrate according to one of Claims 1 to 6, **characterized in that** the said top surface level does not exhibit a continuity in any of the directions of the plane of the substrate.

10. Substrate according to one of the preceding claims, **characterized in that** the said relief comprises a multiplicity of substantially identical and cylindrical pits uniformly distributed over the substrate, their axes being substantially perpendicular to the plane of the substrate.

11. Substrate according to one of the preceding claims, **characterized in that** the said relief comprises a discontinuous set of identical or different objects.

12. Substrate according to Claim 11, **characterized in that** the said objects comprise cylinders with axes substantially perpendicular to the plane of the substrate.

13. Substrate according to Claim 12, **characterized in that** the said relief comprises a multiplicity of substantially identical cylindrical solids of revolution uniformly distributed over the substrate.

14. Substrate according to one of the preceding claims, **characterized in that** the said relief is based on at least one compound of at least one of the elements: Si, W, Sb, Ti, Zr, Ta, V, Pb, Mg, Al, Mn, Co, Ni, Sn, Zn and In, and/or on a plastic, optionally with a ;filler, which can be cured by application of an energy source, or thermoplastic, and **in that** at least one underlying part of the substrate is composed of a glass and/or of a plastic.

15. Substrate according to one of the preceding claims, **characterized in that** it is electrically conducting.

16. Substrate according to one of the preceding claims, **characterized in that** it exhibits antireflective properties.

17. Substrate according to one of the preceding claims, **characterized in that** it exhibits antisoiling properties.

18. Process for the formation of a substrate comprising a relief according to one of the preceding claims, **characterized in that** it comprises the stages consisting in:
- applying, to a backing surface, a precursor with a liquid to viscous consistency, in
- carrying out, starting from this precursor, the moulding of a sol-gel, and in then
- consolidating the latter by evaporation of solvent, optionally assisted by an energy source,
and **in that** a hydrophobic or hydrophilic agent is incorporated in the said substrate comprising a relief or **in that** it comprises a stage consisting in forming a hydrophobic or hydrophilic coating on the said relief.

19. Process for the formation of a substrate comprising a relief according to one of Claims 1 to 17,
**characterized in that** it comprises the stages consisting in:
- applying, to a backing surface, a plastic polymerizable and/or crosslinkable composition optionally comprising fillers, in particular inorganic reinforcing fillers, in
- carrying out the polymerization and/or the crosslinking, and also the separation of possible residual constituents, such as solvent, optionally assisted by an energy source, and **in that** a hydrophobic or hydrophilic agent is incorporated in the said substrate comprising a relief or **in that** it comprises a stage consisting in forming a hydrophobic or hydrophilic coating on the said relief.

20. Process for the formation of a substrate comprising a relief according to one of Claims 1 to 17,
**characterized in that** it comprises the stages consisting in:
- forming a mask on a surface according to a technique such as silk screen printing, inkjet printing, lithography, in particular photolithography, etching, for example reactive ionic etching, or the like, in
- attacking, in particular chemically, the parts of the said surface not protected by this mask, and in then optionally
- removing the mask,
and **in that** a hydrophobic or hydrophilic agent is incorporated in the said substrate comprising a relief or **in that** it comprises a stage consisting in forming a hydrophobic or hydrophilic coating on the said relief.

21. Process for the formation of a substrate comprising a relief according to one of Claims 1 to 17,
**characterized in that** it comprises a stage consisting in causing a film itself forming the said relief to adhere to a backing surface, and **in that** a hydrophobic or hydrophilic agent is incorporated in the said substrate comprising a relief or **in that** it comprises a stage consisting in forming a hydrophobic or hydrophilic coating on the said relief.

22. Process according to one of Claims 18 to 21, **characterized in that** the stages claimed result in the formation of a mould which can be used to form the said substrate.

23. Process according to one of Claims 18 to 21, **characterized in that** the stages claimed result in the formation of the said substrate itself.

24. Glazing, composed at least in part of a substrate according to one of Claims 1 to 17.

25. Application of a glazing according to Claim 24 for buildings or street furniture.

26. Application of a glazing according to Claim 24 for an air, sea or ground transport vehicle.

27. Application of a glazing according to Claim 24 for an illuminated screen, lamp or display device.

28. Application of a glazing according to Claim 24 for furniture or domestic electrical appliances, for example as shelf for a refrigerator or other device, shower wall, refrigerator or oven door, display cabinet or glass-ceramic plate.
